Europäisches Patentamt

(19) European Patent Office

Office européen des brevets

(11) Veröffentlichungsnummer: **0 030 312**
**B1**

(12) # EUROPÄISCHE PATENTSCHRIFT

(45) Veröffentlichungstag der Patentschrift:
25.01.84

(51) Int. Cl.³: **A 61 C 9/00**

(21) Anmeldenummer: 80107310.7

(22) Anmeldetag: 24.11.80

(54) **Verfahren zur Herstellung eines Gebissmodeils.**

(30) Priorität: 11.12.79 DE 2949697

(43) Veröffentlichungstag der Anmeldung:
17.06.81 Patentblatt 81/24

(45) Bekanntmachung des Hinweises auf die Patenterteilung:
25.01.84 Patentblatt 84/4

(84) Benannte Vertragsstaaten:
AT CH DE FR GB IT LI NL SE

(56) Entgegenhaltungen:
DE - A - 2 653 743
US - A - 3 277 576
US - A - 3 890 710
US - A - 3 937 773
US - A - 4 001 938
US - A - 4 139 943

(73) Patentinhaber: Zeiser, Manfred P.Dr., Im Wolfsgalgen 8,
D-7141 Schwieberdingen (DE)

(72) Erfinder: Zeiser, Manfred P.Dr., Im Wolfsgalgen 8,
D-7141 Schwieberdingen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung eines Gebissmodells

Die Erfindung bezieht sich auf ein Verfahren zur Herstellung eines Gebissmodells zur Anfertigung von Zahnersatzteilen wie Einlage-Gussfüllungen, Kronen, Brücken, Gebissprothesen und dgl., bei dem positive Nachbildungen der aus Modellwerkstoff gefertigten Zahnstümpfe über Stifte lösbar an einem Sockel fixiert sind, wobei jeder Stift in eine Aufnahme einer Sockelplatte eingesteckt wird, danach ein Gebissabdruck mit dem Modellwerkstoff aufgefüllt wird und schliesslich die an der Sockelplatte fixierten Stifte in den aushärtenden Modellwerkstoff teilweise eingetaucht werden.

Bei einem aus der US-PS 3 937 773 bekannten Verfahren dieser Art wird eine Sockelplatte aus Kunststoff verwendet, die in mehreren Reihen jeweils im Abstand nebeneinander angeordnete zylindrische Aufnahmen für die Stifte aufweist. Die Stifte können dabei nur in die in vorgegebener Anordnung an der vorgefertigten Sockelplatte vorgesehenen Aufnahmen eingesteckt werden. Die Stifte können folglich nicht genau auf die Kauflächenmitte der Zahnstümpfe ausgerichtet werden. Ist aber bei einem verhältnismässig kleinen Zahnstumpf der Stift nicht exakt im Zentrum angeordnet, sind jeweils bei einem mehrmaligen Zerlegen und Zusammenfügen des Modells Ausbrüche aus dem Modellwerkstoff kaum zu vermeiden. Dabei kann es vorkommen, dass ein Stift an der Oberfläche eines Zahnstumpfes oder in der Trennebene zwischen zwei Zahnstümpfen plaziert sird, so dass das Modell nicht brauchbar ist und neu gefertigt werden muss.

Bei dem Verfahren nach dieser Vorveröffentlichung wird nach der Aushärtung des Modellwerkstoffes auf dessen Oberfläche ein Trennmittel, beispielsweise Wachs aufgetragen. Darüber wird dann eine aushärtbare Masse gegossen, die die Sockelplatte umgibt. Diese Masse bildet nach der Aushärtung zusammen mit der darin eingebetteten Sockelplatte den Modellsockel. Dieses Verfahren ist daher sehr zeitaufwendig, denn nach dem Aushärten des Modellwerkstoffes muss noch das Aushärten der Sockelmasse abgewartet werden, bevor das Modell weiterbearbeitet werden kann.

Es sind auch bereits Verfahren zur Herstellung eines Gebissmodells bekannt, bei denen die Stifte exakt auf die Kauflächenmitte hin ausgerichtet werden können. Dabei werden die Stifte aber zunächst an einer Hilfseinrichtung festgelegt und der gesamte Sockel wird erst nach dem Aushärten des Modellwerkstoffes angeformt. Bei dem Verfahren nach der DE-OS 2 653 743 dient als Hilfseinrichtung eine durchsichtige Platte, an der an individuell anhand des Gebissabdruckes ausgewählten Stellen Gummihülsen festgeklebt werden, in die die Stifte eingesteckt werden. Bei dem Verfahren nach der US-PS 3 890 710 stecken die Stifte an individuell ausgewählten Stellen in einer Schaumstoffplatte. In beiden Fällen wird die mit den Stiften bestückte Platte so auf den Gebissabdruck abgesenkt, dass die Stifte teilweise in den ausgehärteten Modellwerkstoff eintauchen. Nach dem Aushärten des Modellwerkstoffes werden die Stifte von der Hilfseinrichtung gelöst und in einer aushärtbaren Masse eingebettet, die schliesslich den Modellsockel bildet.

Bei diesen Verfahren ist zwar eine sachgerechte Positionierung der Stifte möglich, aber die erwünschte parallele Ausrichtung der Stifte ist im Gegensatz zu dem Verfahren nach der US-PS 3 937 773 nicht mit der notwendigen Genauigkeit gewährleistet. Da die Stifte nämlich mehr oder weniger elastisch, auf jeden Fall aber nicht formschlüssig an der Hilfseinrichtung festgelegt sind, können sie beim Eintauchen in den Modellwerkstoff und/oder aufgrund der Abbindeexpansion des Modellwerkstoffes aus ihrer ursprünglichen Lage ausgelenkt werden. Im übrigen ist es sehr schwierig und zeitraubend, wenn nicht sogar unmöglich, die Stifte exakt parallel an einem Schaumstoff festzulegen bzw. die Hülsen lagerichtig an der Platte festzukleben. Sind aber die Stifte nicht parallel zueinander ausgerichtet, kann später ein Modellabschnitt nur unter Schwierigkeiten von dem Sockel abgezogen werden, wobei eine Beschädigung des Modells nicht ausgeschlossen werden kann.

Besonders nachteilig bei den Verfahren nach der DE-OS 2 653 743 bzw. der US-PS 3 890 710 ist, dass der Sockel ausschliesslich aus Gips oder einem ähnlichen Material besteht, bei dem eine Volumenänderung durch Abbindeexpansion eintritt, was zur Folge hat, dass das Modell nicht mehr genau dem Original entspricht. Aufgrund dieser Abbindeexpansion erweitern sich auch die Stiftaufnahmen im Sockel und ein genauer Passsitz ist nicht mehr gewährleistet. Diese Passung wird durch mehrmaliges Zerlegen noch verschlechtert, weil beim Zusammenfügen die Stiftaufnahmen im Gipssockel ausgeschabt werden. Die auf der Basis eines solchen Modells angefertigten Ersatzteile müssen psäter nachgearbeitet werden, was sehr zeitraubend ist.

Der Erfindung liegt daher die Aufgabe zugrunde, das eingangs erwähnte Verfahren so weiterzubilden, dass Gebissmodelle mit einem geringeren Zeitaufwand und höherer Genauigkeit als bisher hergestellt werden können. Insbesondere soll mit einfachen Mitteln eine exakt parallele Ausrichtung der Stifte an individuell festgelegten Positionen möglich sein.

Diese Aufgabe wird erfindungsgemäss dadurch gelöst, dass die Sockelplatte aus einem formbeständigen Werkstoff allein den Modellsockel bildet, dass diese Sockelplatte vor dem Ausfüllen des Gebissabdruckes in eine exakt definierte Lage zum Gebissabdruck gebracht wird, dass anhand des Gebissabdruckes die Positionen der Stifte individuell festgelegt werden und an entsprechenden Stellen in die Sockelplatte die Aufnahmen für die Stifte eingearbeitet werden und dass nach dem Einsetzen der Stifte in die Aufnahmen die Sockelplatte in eine solche Lage in bezug zu dem mit Modellwerkstoff aufgefüllten Gebissabdruck gebracht wird, dass die Stifte an den festgelegten Positionen in den aushärtenden Werkstoff eintauchen.

Die Erfindung vereinigt in sich die Vorteile der bekannten Verfahren, ohne zugleich deren Nachteile aufzuweisen. Durch die formschlüssige Festlegung der Stifte in Aufnahmen einer formstabilen Sockelplatte ist eine exakte Parallelführung der Stifte gewährleistet. Durch die individuelle Festlegung und Einarbeitung der Aufnahmen in die ursprünglich nicht vorgebohrte Sockelplatte wird gewährleistet, dass die Stifte später genau an den vorgesehenen Positionen in den Modellwerkstoff eintauchen, also meist auf die Kauflächenmitte ausgerichtet sind. Da die Sockelplatte bei dem erfindungsgemässen Verfahren allein den Modellsockel bildet, entfällt das zeitraubende Angipsen des Sockels. Das Modell kann beliebig oft von seinem Sockel abgenommen werden, ohne dass eine Erweiterung der Stiftaufnahmen zu befürchten ist. Da der Sockel formstabil ist, entspricht auch das Modell dem Original in einer Genauigkeit, die bisher nicht erreichbar war.

Als Werkstoff für die Sockelplatte eignen sich verschiedenartige Materialien. Vom verwendeten Werkstoff hängt es ab, ob die Stifte ohne zusätzliche Massnahmen direkt in die Sockelplatte eingedrückt oder vorher erwärmt werden. Besonders bevorzugt wird eine Ausführung, bei der in die Sockelplatte zunächst Führungsbohrungen eingearbeitet werden und die Stifte in diese Bohrungen in erwärmtem Zustand eingedrückt werden. Bei Verwendung eines thermoplastischen Kunststoffes als Werkstoff für die Sockelplatte wird dabei die Bohrlochwandung kurzzeitig plastifiziert und nimmt die äussere Form des Stiftes an, so dass eine sehr gute Passung zwischen Stift und Stiftaufnahme erreicht wird. Damit können auch Stifte mit unterschiedlichem Querschnitt, beispielsweise als Stanz- oder Prägeteil hergestellte Stifte verwendet werden.

Die Erfindung und deren vorteilhafte Weiterbildungen werden nachstehend anhand der Zeichnung näher erläutert. Es zeigen:

Fig. 1 einen Umriss einer Sockelplatte für ein Modell eines Unterkiefers,

Fig. 2 einen Umriss einer Sockelplatte für ein Modell eines Oberkiefers,

Fig. 3 einen Schnitt durch die Sockelplatte nach Fig. 1,

Fig. 4 in vergrösserter Darstellung einen Ausschnitt der Platte vor dem Fixieren des Stiftes,

Fig. 5 einen Ausschnitt der Platte mit fixiertem Stift,

Fig. 6 einen an der Platte befestigten Doppelzahnstumpf,

Fig. 7 eine perspektivische Darstellung eines Ausrichtgerätes.

Bevor im einzelnen auf die Figuren eingegangen wird, muss darauf hingewiesen werden, dass diese das Wesen der vorliegenden Erfindung nur schematisch darstellen und zum Teil auch nicht massstabsgerecht ausgeführt sind.

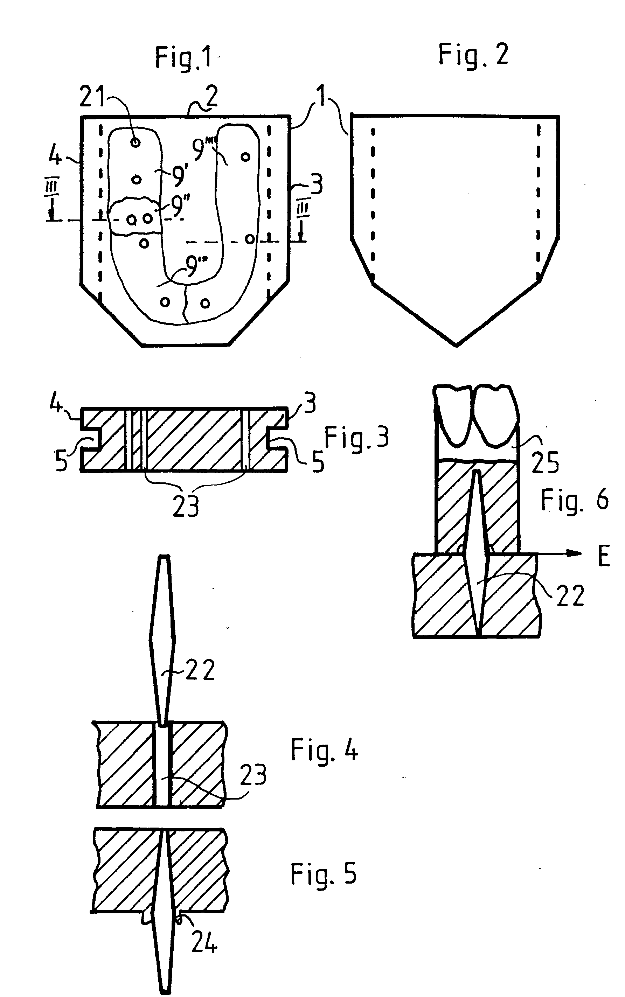

Fig. 1 zeigt den Umriss einer Sockelplatte 1, nachstehend auch einfach Platte genannt, die zur Anfertigung eines Modells eines Unterkiefers gedacht ist. Die Platte 1 hat einen mehreckigen Umriss, der dem Gebissabdruck eines Unterkiefers wenigstens annähernd angepasst ist. Die Seitenkanten der Platte 1 verlaufen wenigstens annähernd parallel zu den Tangenten der Aussenflächen der letzten Backenzähne, Eckzähne und Frontzähne. Fig. 2 zeigt eine entsprechend ausgebildete Platte für das Modell eines Oberkiefers. Natürlich sind auch andere Formen denkbar, insbesondere wenn nur ein Teilbereich eines Kieferteils in einem Modell dargestellt werden soll.

Die Platte 1 hat zwei parallel zueinander verlaufende Führungsflächen 3, 4, in die Führungsnuten 5 eingearbeitet sind. Ausserdem ist senkrecht dazu eine Anschlagfläche 2 vorgesehen. Diese Flächen und Anschläge gewährleisten, dass die Platte 1 reproduzierbar immer wieder in die gleiche Position in einem Ausrichtgerät gebracht werden kann.

Die Platte 1 hat eine Dicke von etwa 10 mm. Sie ist aus einem formbeständigen Material hergestellt. Vorzugsweise verwendet man Acrylglas, das leicht, aber hart und bruchfest ist und sich gut bearbeiten lässt. Ein glasklarer Werkstoff erleichtert das Festlegen der Fixierpunkte für die Stifte. Mann kann aber auch andere thermoplastische Kunststoffe verwenden, insbesondere Kunststoffe mit einem niedrigen Schmelzpunkt. Es eignen sich auch metallische Werkstoffe, beispielsweise Weichaluminium. Von den Eigenschaften des Plattenwerkstoffes hängt die Art und Weise ab, wie man die Stifte in der Platte fixiert.

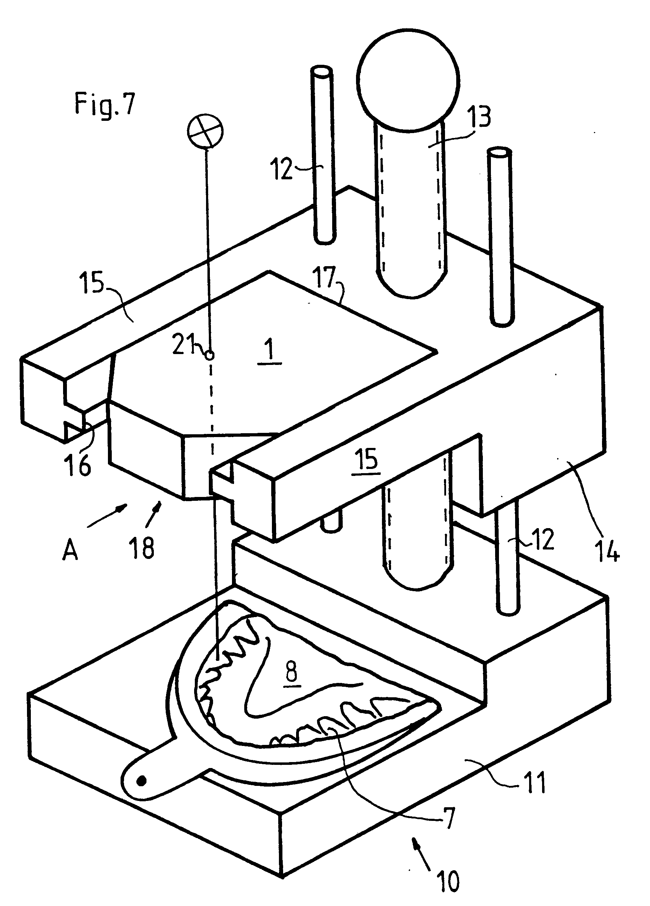

Bevor anhand der Fig. 3 bis 6 das Herstellungsverfahren näher erläutert wird, wird das in Fig. 7 schematisch dargestellte Ausrichtgerät 10 beschrieben. Dieses Ausrichtgerät hat einen Auflageteller 11 für den in einem Abdrucklöffel 7 befindlichen Gebissabdruck 8. Über Führungsstangen 12 und eine Gewindespindel 13 ist ein Träger 14 vertikal verstellbar gelagert. Dieser Träger hat zwei parallel zueinander verlaufende Schenkel 15 mit Führungsleisten 16. Die beiden Schenkel 15 bilden zusammen mit einem Anschlagsteg 17 einen Rahmen 18 für die Platte 1. Die Platte 1 kann in Richtung des Pfeiles A in den Rahmen 18 eingeschoben werden, wobei die Führungsflächen passend an den Schenkeln und die Anschlagfläche 2 am Anschlagsteg 17 anliegt. Die Platte ist auch in vertikaler Richtung fixiert. Die Platte ist damit eindeutig im Rahmen und damit auch in bezug auf den darunter angeordneten Gebissabdruck 8 fixiert. Diese Ausgangslage ist jederzeit exakt reproduzierbar. Bei einem anderen in der Zeichnung nicht näher dargestellten Ausführungsbeispiel ist der Rahmen allseitig geschlossen, wobei die Form dem Plattenumriss entspricht. Die Platte ist dann in horizontaler Lage in allen Richtungen am Rahmen festgelegt und kann lediglich in vertikaler Richtung aus dem Rahmen entfernt werden. Wichtig ist, dass der Durchbruch im Rahmen grösser oder allenfalls gleich ist dem Umriss des Gebissabdruckes.

Im folgenden wird nun das Verfahren zur Herstellung eines Gebissmodells näher erläutert. Vorausgesetzt wird ein auf herkömmliche Weise hergestellter Gebissabdruck 8 im Abdrucklöffel 7. Dieser Abdrucklöffel wird auf einem Okklusionsausrichtblech mittels einer Knetmasse derart befestigt, dass nicht nur die Okklusionsebene parallel mit der Ausrichtplatte verläuft, sondern auch die Gaumennahtabformung im Abdruck mit der Mittellinie der Ausrichtplatte bzw. deren Markierungen verläuft. Dieser Verfahrensschritt ist bekannt und daher nicht näher dargestellt. Zur Vereinfachung der Darstellung in Fig. 7 soll davon ausgegangen werden, dass diese Ausrichtung unmittelbar auf dem Auflageteller 10 erfolgt ist und ein Ausrichtblech nicht benötigt wurde. Ausserdem sind in Fig. 7 die Mittel zum Festspannen des Abdrucklöffels in einer definierten und reproduzierbaren Lage nicht dargestellt.

Nach dem Einlegen der Sockelplatte 1 in den Rahmen 18 werden die Fixierpunkte 21 für die Stifte 22 festgelegt. Ist die Platte aus transparentem Material, kann der Fixierpunkt durch einen senkrecht einfallenden eng gebündelten Lichtstrahl bestimmt werden, wie das in Fig. 7 schematisch dargestellt ist. Die Lichtquelle wird im allgemeinen so ausgerichtet, dass die Kauflächenmitte der im Abdruck dargestellten klinischen Krone angestrahlt wird. Da sich der Gebissabdruck 7 und die Sockelplatte 1 in dem Ausrichtgerät in einer korrespondierenden Lage befinden, kann durch geeignete Mittel sehr leicht der Fixierpunkt 21 an der Stelle der Platte markiert werden, an der der Lichtstrahl auf die Platte auftrifft.

Die Fixierpunkte können aber auch durch eine Markierungsvorrichtung festgelegt werden, indem deren Peilstab nach Entfernen der Platte zunächst auf den gewünschten Punkt des Abdruckes ausgerichtet wird, anschliessend die Platte wieder in die korrespondierende Lage gebracht und dann der Peilstab mit der Oberfläche der Platte in Berührung gebracht wird. Dabei darf natürlich die Stellung der Markierungsvorrichtung relativ zum Ausrichtgerät nicht verändert werden. Als Markierungsvorrichtung kann beispielsweise eine in einem Bohrständer eingespannte Bohrmaschine verwendet werden, wobei der Bohrer als Peilstab wirkt. Durch den Bohrer kann dabei zugleich die Sockelplatte an den Fixierpunkten durchbohrt werden. Als Peilstab kann auch eine vertikal verstellbare erwärmte Nadel oder ein Lötkolben verwendet werden, der an den entsprechenden Stellen einer Kunststoffplatte Eindrücke hinterlässt. Andere Ausführungen der Markierungsvorrichtung sind denkbar. Wesentlich ist, dass die vorgesehenen Punkte im negativen Gebissabdruck im Massstab 1:1 auf die Platte übertragen werden.

Wenn alle Fixierpunkte auf die Sockelplatte übertragen sind, können die Stifte 22 fixiert werden. In Fig. 1 sind diese Fixierpunkte und ihre Verteilung angedeutet, wenn man beispielsweise vier Gebissteile 9' bis 9'''' separat am Sockel lösbar befestigen will. Bei einer Alternativlösung werden nun zunächst Bohrlöcher 23 in die Platte 1 eingearbeitet. Dazu eignen sich Bohrer mit einem Durchmesser von 2 oder 2,5 mm. Wie Fig. 4 zeigt, soll der Durchmesser der Bohrung grösser sein als der Durchmesser an der Spitze des Stiftes, andererseits aber kleiner sein als der grösste Durchmesser des in die Platte eintauchenden Stiftabschnittes.

Anschliessend wird der Stift 22 in erwärmtem Zustand in das Bohrloch 23 eingedrückt. Das Material der Bohrlochwandung wird dabei kurzzeitig plastifiziert. Die Kontur des Bohrloches entspricht dann genau der Form des Stiftes. Auf diese Weise wird eine besonders genaue Passung zwischen dem Bohrloch bzw. der Stiftaufnahme im Sockel und dem Stift erreicht.

Wenn die Platte aus einem weichen Metall hergestellt ist, kann auf die Erwärmung des Stiftes verzichtet werden und der Stift allein durch Anwendung von Druck eingebracht werden. Der Stift schafft sich durch Kaltverformung selbst sein Aufnahmelager. Bei Verwendung einer Platte aus einem Werkstoff mit einem niedrigen Schmelzpunkt kann unter Umständen auf das Bohren verzichtet werden. Der Stift kann dabei nach Erwärmung unmittelbar an den angezeichneten Fixierpunkten in die Platte eingedrückt werden. Durch geeignete Massnahmen, etwa durch Laserstrahlen kann man eventuell auch konische Bohrungen in die Platte einbringen, was das spätere Einsetzen der Stifte erleichtert.

Als sehr vorteilhaft hat sich eine Lösung herausgestellt, bei der zunächst die Platte durchbohrt und anschliessend durch eine Lötspitze das Bohrloch erweitert und dabei die Platte örtlich erwärmt wird. Nun kann der Stift in kaltem Zustand eingedrückt werden und die Bohrlochwandung wird dennoch kurzzeitig plastifiziert. In Weiterbildung dieses Gedankens kann die Lötspitze genau die Form des Stiftes oder zumindest eine angepasste Form aufweisen. Auch bei dieser Alternative wird das spätere Einsetzen des Stiftes erleichtert, ohne dass darunter die genaue Passung leidet.

Die Stifte können schliesslich auch ohne Druck und Wärme in der Platte beispielsweise durch Reibung oder Spreizung verankert werden. Die Stifte können auch in einer in die Platte eingeschraubten Hülse verankert werden. Ausserdem können die Stifte beispielsweise in Sacklöcher in der Platte eingeklebt werden. Auch Sicherungsringe oder andere Rastmittel können zur Fixierung verwendet werden.

Wesentlich ist auf jeden Fall, dass die Stifte parallel zueinander und senkrecht zur Platte verankert werden. Dies wird durch die sehr genau gebohrten Löcher, die als Führung beim Eindrücken der Stifte dienen, gewährleistet. Eine spezielle Haltevorrichtung für die Stifte kann dies erleichtern. Bei der plastischen Verformung der Bohrlochwandung bildet sich meist ein Wulst, der die Führungsfläche für den Stift noch vergrössert. Dies ist in Fig. 4 dargestellt.

Die oben geschilderten alternativen Verfahren zur Fixierung der Stifte an der Platte zeigen auf, dass die Stifte lösbar oder auch unlösbar an der Platte verankert werden. Entsprechend sind unterschiedliche Stiftausbildungen möglich. Nach dem Fixieren der Stifte wird die Platte wieder in die definierte Position im Halterahmen gebracht. Die Stifte ragen dabei auf der zum Abdruck gerichteten Seite aus der Platte heraus. Nun wird ermittelt, in welcher Höhe über der Okklusionsebene die Platte angeordnet werden soll. Dies ist bei einem Oberkieferabdruck zum Beispiel auch davon abhängig, ob der Gaumen dargestellt werden soll oder nicht. Eine genaue Ausrichtung ist durch vertikale Verstellung des Rahmens mittels der Gewindespindel möglich. Man wird vorteilhafterweise immer versuchen, den Abstand zwischen Platte und Abdruck möglichst klein zu halten.

Danach wird in bekannter Weise der Abdruck mit Modellwerkstoff gefüllt. Auf die Sockelplatte kann zusätzlich Modellwerkstoff aufgetragen werden, der nicht unbedingt von gleicher Beschaffenheit sein muss. Nach dem Absenken der Platte tauchen die Stifte in den Modellwerkstoff ein, wobei die korrespondierenden Punkte genau übereinanderliegen. Nach der Aushärtung des Modellwerkstoffes, der nun eine getreue Abformung des Abdruckes darstellt, kann diese positive Nachbildung vom Sockel getrennt werden. Fig. 6 zeigt einen Ausschnitt eines solchen Modells, bei dem ein Doppelzahnstumpf 25 mittels eines Stiftes 22 an der Platte verankert ist.

Abschliessend wird noch ein besonders einfaches und zeitsparendes Verfahren zur Fixierung der Stifte in der Platte beschrieben, das sich bei den durchgeführten Versuchen als besonders vorteilhaft herausgestellt hat. Dieses Verfahren ist dadurch gekennzeichnet, dass alle Stifte zugleich in einem einzigen Arbeitsvorgang eingedrückt werden. Dabei werden zunächst alle Stifte ohne Kraftaufwand in die Bohrungen der Platte eingesteckt. Die Stifte tauchen dabei nur geringfügig in die Bohrungen ein, was vom Durchmesser der Bohrungen im Vergleich zu dem sich konisch ändernden Querschnitt der Stifte abhängt (vgl. Fig. 4). Die Platte mit den lose eingesteckten Stiften wird dann einer Wärmebehandlung mit heisser Umluft bei etwa 200°C unterzogen. Dabei wird der Plattenwerkstoff und jeder Stift gleichmässig und zügig erwärmt, so dass der Plattenwerkstoff im Bereich der Bohrungen nachgiebig wird, ohne dass sich die Platte insgesamt verzieht. Anschliessend werden alle Stifte durch einen gemeinsamen Druckübertragungsteller, der auf die freien Stirnflächen der Stifte aufgelegt wird, in die Bohrungen eingedrückt, die sich dabei entsprechend dem Querschnitt der Stifte verformen. Nach der Abkühlung bleibt diese Verformung erhalten.

Auf diese Weise wird eine besonders genaue Passung zwischen den Stiften und den Bohrungen erreicht. Vorteilhaft ist auch die absolut gleiche Eindringtiefe der Stifte in die Platte. Ein Verkleben der Stifte in der Platte tritt nicht auf, da bei einer Wärmebehandlung in einem thermostatisch geregelten Umluftheizgerät eine Überhitzung des Plattenwerkstoffes sowie der Stifte und damit eine Oxydation der Stifte an der Oberfläche nicht zu befürchten ist.

Dieses Verfahren kann auf verschiedenartige Weise durchgeführt werden. Bei einer ersten Alternative wird die Platte mit den Stiften nach der Erwärmung aus dem Heizgerät entfernt und in einem zusätzlichen Arbeitsgang werden alle Stifte zugleich eingedrückt. Im einfachsten Fall geschieht dies dadurch, dass man einen schweren Metallteller auf die freie Stirnfläche der Stifte auflegt, so dass die Stifte durch das Eigengewicht dieses Tellers eingedrückt werden. Das Eindrücken kann auch manuell unterstützt werden, wobei man eine Art Schraubstock verwenden kann.

Vorteilhaft ist aber eine zweite Alternative, bei der die Stifte während der Erwärmung selbsttätig in die Bohrungen der Platte eingedrückt werden. Man verwendet dazu eine Eindrückvorrichtung, bei der ein Druckübertragungsteller beweglich an Führungssäulen geführt ist, die an einem Trägerteller geführt sind. Dabei kann der Druckübertragungsteller wieder durch sein Eigengewicht, besser aber durch ein Federelement in Richtung auf den Trägerteller vorgespannt sein. Die Platte mit den lose ingesteckten Stiften wird dabei zwischen diesem Trägerteller und dem Druckübertragungsteller eingespannt und mit der Eindrückvorrichtung in das Umluftheizgerät gestellt. Nach entsprechender Wärmebehandlung gleiten die Stifte dann selbsttätig in die Bohrungen. Falls gewünscht kann man durch Anschläge an dieser Eindrückvorrichtung sicherstellen, dass die Stifte die Platte nicht vollständig durchdringen.

Bei einer dritten Alternative wird zunächst nur die Platte erwärmt. Dann werden alle Stifte in die Bohrungen eingesetzt und anschliessend gemeinsam durch Auflage des Druckübertragungstellers eingedrückt.

Bei den Alternativen, bei denen die Stifte ausserhalb der Heizvorrichtung in die Bohrungen der Platte eingedrückt werden, kann als Eindrückvorrichtung auch das Ausrichtgerät verwendet werden. Dazu wird ein Blechrahmen so auf die Schenkel des Trägers aufgeschoben, dass ein Abschnitt dieses Blechrahmens von der Unterseite her an den Schenkeln anliegt. Dieser Abschnitt dient dann als Druckübertragungsteller, der an den freien Stirnseiten der Stifte zur Anlage gebracht wird.

Zu dem zuletzt beschriebenen Verfahren ist noch ein wichtiger Vorteil nachzutragen. Normalerweise dringen die Stifte in die Platte so weit ein, dass ihre Stirnflächen auf dem Trägerteller aufliegen, also bündig mit der unteren Plattenfläche abschliessen. Daran ändert sich nichts, wenn sich die Platte aufgrund der Erwärmung geringfügig in horizontaler und vertikaler Richtung ausdehnt. Nimmt die Platte aber nach dem Erkalten wieder die ursprüngliche Form ein, stehen die Stifte aus der unteren Fläche der Platte geringfügig heraus. Durch Druck auf diesen herausstehenden Ansatz können die Stifte sehr leicht aus der Platte herausgedrückt werden.

**Patentansprüche**

1. Verfahren zur Herstellung eines Gebissmodells zur Anfertigung von Zahnersatzteilen wie Einlage-Gussfüllungen, Kronen, Brücken, Gebissprothesen und dgl., bei dem positive Nachbildungen der aus Modellwerkstoff gefertigten Zahnstümpfe über Stifte (22) lösbar an einem Sockel fixiert sind, wobei jeder Stift (22) in eine Aufnahme (23) einer Sockelplatte (1) eingesteckt wird, danach ein Gebissabdruck (8) mit dem Modellwerkstoff aufgefüllt wird und schliesslich die an der Sockelplatte (1) fixierten Stifte (22) in den aushärtenden Modellwerkstoff teilweise eingetaucht werden, dadurch gekennzeichnet, dass diese Sockelplatte (1) aus einem formbeständigen Werkstoff allein den Modellsockel bildet, dass diese Sockelplatte (1) vor dem Ausfüllen des Gebissabdruckes (8) in eine exakt definierte Lage zum Gebissabdruck (8) gebracht wird, dass anhand des Gebissabdruckes (8) die Positionen der Stifte (22) individuell festgelegt und an entsprechenden Stellen in die Sockelplatte (1) die Aufnahmen (23) für die Stifte eingearbeitet werden und dass nach dem Einsetzen der Stifte (22) in die Aufnahmen (23) die Sockelplatte (1) in eine solche Lage in bezug zu dem mit Modellwerkstoff aufgefüllten Gebissabdruck (8) gebracht wird, dass die Stifte (22) an den festgelegten Positionen in den aushärtenden Werkstoff eintauchen.

2. Verfahren nach Anspruch 1, dadurch gekennzeichnet, dass auf der Sockelplatte (1), nachdem diese in eine korrespondierende Lage zum Gebissabdruck (8) gebracht ist, Fixierpunkte (21) für die Stifte (22) individuell festgelegt werden.

3. Verfahren nach Anspruch 2, dadurch gekennzeichnet, dass eine Sockelplatte (1) aus einem transparenten, insbesondere glasklaren Werkstoff verwendet wird und die Fixierpunkte (21) mittels eines durch die Sockelplatte (1) auf den Gebissabdruck (8) fallenden eng gebündelten Lichtstrahles festgelegt werden.

4. Verfahren nach Anspruch 2, dadurch gekennzeichnet, dass die Fixierpunkte (21) durch eine Markierungsvorrichtung festgelegt werden, indem ein Peilstab, gegebenenfalls eine beheizte Nadel oder ein Lötkolben, vorzugsweise aber ein Bohrer zunächst auf den gewünschten Punkt des Gebissabdruckes (8) ausgerichtet wird, anschliessend die Sockelplatte (1) in eine korrespondierende Lage zum Gebissabdruck (8) gebracht wird und dann der Peilstab mit der Sockelplatte (1) in Berührung gebracht wird.

5. Verfahren nach Anspruch 2, 3 oder 4, dadurch gekennzeichnet, dass an den festgelegten Fixierpunkten (21) Bohrungen (23) in die Sockelplatte (1) eingearbeitet werden und die Stifte (22) in diese Bohrungen (23) eingedrückt werden.

6. Verfahren nach Anspruch 5, dadurch gekennzeichnet, dass die Stifte (22) vor dem Eindrücken erwärmt werden und die Bohrung (23) durch kurzzeitige Plastifizierung des Sockelplattenwerkstoffes in eine dem Stiftabschnitt entsprechende Form gebracht wird.

7. Verfahren nach Anspruch 5, dadurch gekennzeichnet, dass die Sockelplatte (1) zumindest im Bereich der Bohrung (23) erwärmt wird und die Stifte (22) ohne vorherige Erwärmung eingedrückt werden.

8. Verfahren nach Anspruch 5, dadurch gekennzeichnet, dass die Bohrungen (23) in die Sockelplatte (1) mittels einer beheizten Nadel oder einem Lötkolben eingearbeitet werden.

9. Verfahren nach wenigstens einem der vorhergehenden Ansprüche, dadurch gekennzeichnet, dass die Stifte (22) in die Bohrungen (23) der Sockelplatte (1) ohne Kraftaufwand eingesteckt werden, dass die Sockelplatte (1) und/oder die Stifte (22) erwärmt werden und dass vorzugsweise alle Stifte (22) zugleich durch einen Druckübertragungsteller in die Bohrungen (23) eingedrückt werden.

10. Verfahren nach Anspruch 2, 3 oder 4, dadurch gekennzeichnet, dass die Sockelplatte (1) aus einem Werkstoff mit niedrigem Schmelzpunkt hergestellt ist, dass die Stifte (22) erwärmt werden und ohne vorherige Bohrung unmittelbar in die Sockelplatte (1) eingedrückt werden.

11. Verfahren nach wenigstens einem der vorhergehenden Ansprüche, dadurch gekennzeichnet, dass die Stifte (22) lösbar in der Sockelplatte (1) verankert werden und gegebenenfalls aus der Rückseite der Sockelplatte (1) geringfügig hervorstehen.

12. Verfahren nach wenigstens einem der Ansprüche 1 bis 10, dadurch gekennzeichnet, dass die Stifte (22) unlösbar in der Sockelplatte (1) verankert werden, beispielsweise in die Bohrungen (23) eingeklebt oder an der Sockelplatte (1) mit einem Sicherungsring fixiert werden.

13. Verfahren nach wenigstens einem der Ansprüche 1 bis 5, dadurch gekennzeichnet, dass in der Sockelplatte (1) Hülsen bzw. Matrizen verankert werden und die Stifte (22) in diesen Hülsen befestigt werden.

14. Verfahren nach wenigstens einem der vorhegehenden Ansprüche, dadurch gekennzeichnet, dass die Sockelplatte (1) aus einem thermoplastischen Werkstoff, beispielsweise aus Acrylglas hergestellt ist.

## Claims

1. A method of producing a denture model for the preparation of dental spare parts such as insert cast fillings, crowns, bridges, false teeth and the like, in which positive replicas of tooth stumps made from model material are releasably fixed to a base by way of pins (22), in which respect each pin (22) is inserted into a receiver (23) of a base plate (1) and thereafter a denture impression (8) is filled up with model material and finally the pins (22) fixed on the base plate (1) are partially plunged into the hardening model material, characterised in that this base plate (1), which is made from a material of stable shape, alone forms the model base, in that prior to the filling-up of the denture impression (8) this base plate (1) is brought into an exactly defined position with regard to the denture impression (8), in that with the aid of the denture impression (8) the positions of the pins (22) are individually determined and the receivers (23) for the pins are formed in the base plate (1) of appropriate locations and in that, after the insertion of the pins (22) into the receivers (23), the base plate (1) is brought into such a position with regard to the denture impression (8) filled with model material that the pins (22) plunge into the hardening material at the determined positions.

2. A method according to claim 1, characterised in that fixing points (21) for the pins (22) are individually determined on the base plate (1) after this is brought into an appropriate position with regard to the denture impression (8).

3. A method according to claim 2, characterised in that a base plate (1) made from a transparent, more especially crystal-clear, material is used and the fixing points (21) are determined by means of a concentrated beam of light falling through the base plate (1) onto the denture impression (8).

4. A method according to claim 2, characterised in that the fixing points (21) are determined by a marking device, in which a positioning rod, possibly a heated needle or soldering iron, but preferably a drill, is initially aligned at the desired point of the denture impression (8), the base plate (1) is subsequently brought into a corresponding position with regard to the denture impression (8) and the positioning rod is then brought into contact with the base plate (1).

5. A method according to claim 2, 3 or 4, characterised in that bores (23) are formed in the base plate (1) at the determined fixing points (21) and the pins (22) are pressed into these bores (23).

6. A method according to claim 5, characterised in that the pins (22) are warmed prior to pressing-in and, by temporary plasticization of the material of the base plate each bore (23) is formed into a shape corresponding to the respective pin portion.

6

7. A method according to claim 5, characterised in that the base plate (1) is warmed at least in the region of each bore (23) and the pins (22) are pressed in without previous warming.

8. A method according to claim 5, characterised in that the bores (23) are formed in the base plate (1) by means of a heated needle or a soldering iron.

9. A method according to at least one of the previous claims, characterised in that the pins (22) are inserted into the bores (23) of the base plate (1) without expenditure of energy, in that the base plate (1) and/or the pins (22) are warmed and in that all the pins (22) are preferably pressed into the bores (23) at the same time by a pressure transmission plate.

10. A method according to claim 2, 3 or 4, characterised in that the base plate (1) is produced from a material having a low melting point, in that the pins (22) are warmed and are pressed without previous drilling directly into the base plate (1).

11. A method according to at least one of the preceding claims, characterised in that the pins (22) are releasably anchored in the base plate (1) and possibly protrude slightly from the rear of the base plate (1).

12. A method according to at least one of claims 1 to 10, characterised in that the pins (22) are non-releasably anchored in the base plate (1), being, for example, glued into the bores (23), or fixed to the base plate (1) with a guard ring.

13. A method according to at least one of claims 1 to 5, characterised in that sleeves or matrices are anchored in the base plate (1) and the pins (22) are fastened in these sleeves.

14. A method according to at least one of the preceding claims, characterised in that the base plate (1) is produced from a thermoplastic material, for example from acrylic glass.

**Revendications**

1. Procédé de fabrication d'un modèle de denture pour la réalisation de pièces de prothèse dentaire, telles que remplissages moulés du genre inlay, couronnes, bridges, dentiers et éléments similaires, suivant lequel on fixe des reproductions positives des moignons, fabriquées en matériau de modèle, de façon amovible sur un socle, au moyen de broches (22), chaque broche (22) étant enfichée dans un logement (23) d'une plaque de socle (1), après quoi on remplit une empreinte de dentition (8) de matériau de modèle et enfin on enfonce partiellement les broches (22) fixées sur la plaque de socle (1) dans le matériau durcissable de modèle, caractérisé par le fait que cette plaque de socle (1) constituée par un matériau résistant à la deformation forme seulement le socle du modèle, que cette plaque de socle (1) est amenée dans une position définie exactement par rapport à l'empreinte de dentition (8) avant le remplissage de l'empreinte de dentition (8), que les positions des broches (22) sont déterminées individuellement à l'aide de l'empreinte de dentition (8) et que les logements (23) pour les broches sont formés aux endroits correspondants dans la plaque de socle (1), et qu'après la mise en place des broches (22) dans les logements (23) la plaque de socle (1) est amenée, par rapport à l'empreinte de dentition (8) remplie de matériau de modèle, dans une position telle que les broches (22) plongent dans le matériau durcissable dans les positions déterminées.

2. Procédé suivant la revendication 1, caractérisé par le fait qu'on détermine individuellement des points de fixation (21) pour les broches (22) sur la plaque de socle (1), après que celle-ci ait été amenée dans une position correspondante par rapport à l'empreinte de dentition (8).

3. Procédé suivant la revendication 2, caractérisé par le fait qu'on utilise une plaque de socle (1) en matériau transparent, notamment ayant la clarté du verre, et qu'on détermine les points de fixation (21) au moyen d'un faisceau lumineux étroit tombant sur l'empreinte de dentition (8) à travers la plaque de socle (1).

4. Procédé suivant la revendication 2, caractérisé par le fait qu'on détermine les points de fixation (21) à l'aide d'un dispositif de marquage, dans lequel une tige de repérage, éventuellement une aiguille chauffée ou un fer à souder, de préférence cependant un foret, est tout d'abord dirigée sur le point souhaité de l'empreinte de dentition (8), ensuite la plaque de socle (1) est amenée dans une position correspondante par rapport à l'empreinte de dentition (8), et la tige de repérage est alors amenée en contact de la plaque de socle (1).

5. Procédé suivant la revendication 2, 3 ou 4, caractérisé par le fait qu'on perce des trous (23) dans la plaque de socle (1) au niveau des points de fixation (21) déterminés et qu'on enfonce les broches (22) dans ces trous (23).

6. Procédé suivant la revendication 5, caractérisé par le fait qu'on chauffe les broches (22) avant enfoncement et on amène le trou (23) dans une forme correspondant à la section de broche par ramollissement de courte durée du matériau de la plaque de socle.

7. Procédé suivant la revendication 5, caractérisé par le fait qu'on chauffe la plaque de socle (1) au moins dans la région du perçage (23) et on enfonce les broches (22) sans échauffement préalable.

8. Procédé suivant la revendication 5, caractérisé par le fait qu'on perce les trous (23) dans la plaque de socle (1) au moyen d'une aiguille chauffée ou d'un fer à souder.

9. Procédé suivant au moins une des revendications précédentes, caractérisé par le fait qu'on enfonce les broches (22) dans les trous (23) de la plaque de socle (1) sans exercer de force, qu'on chauffe la plaque de socle (1) et/ou les broches (22) et que de préférence on enfonce toutes les broches (22) en même temps dans les trous (23) ou moyen d'un dispositif d'ajustage de transmission de pression.

10. Procédé suivant la revendecation 2, 3 ou 4, caractérisé par le fait que la plaque de socle (1) est fabriquée à partir d'un matériau possédant un faible point de fusion, que les broches (22) sont chauffées et sont enfoncées directement dans la plaque de socle (1) sans perçage préalable.

11. Procédé suivant au moins une des revendications précédentes, caractérisé par le fait que les broches (22) sont ancrées de façon amovible dans la plaque de socle (1) et ressortent éventuellement légèrement de la face arrière de la plaque de socle (1).

12. Procédé suivant au moins une des revendications 1 à 10, caractérisé par le fait que les broches (22) sont ancrées de façon inamovible dans la plaque de socle (1), par exemple collées dans les trous (23) ou sont fixées sur la plaque de socle (1) à l'aide d'une bague de blocage.

13. Procédé suivant au moins une des revendications 1 à 5, caractérisé par le fait que des manchons ou matrices sont ancrés dans la plaque de base (1) et que les broches (22) sont fixées dans ces manchons.

14. Procédé suivant au moins une des revendications précédentes, caractérisé par le fait que la plaque de socle (1) est fabriquée en matériau thermoplastique, par exemple en verre acrylique.

Fig.1  Fig. 2

Fig.3

Fig. 6

Fig. 4

Fig. 5

Fig.7